# FASCICULE DE BREVET EUROPEEN

(11) **EP 4 353 598 B1**
(45) Date de publication et mention de la délivrance du brevet: **01.01.2025**
(21) Numéro de dépôt: 23203159.1
(22) Date de dépôt: 12.10.2023
(51) Int. Cl.: B64D 29/06

(54) **VERROU À CROCHET POUR PANNEAU D'AÉRONEF**
HAKENSCHLOSS FÜR EINE FLUGZEUGPLATTE
AIRCRAFT PANEL HOOK LATCH

(30) Priorité: 14.10.2022 FR 2210592
(43) Date de publication de la demande: 17.04.2024
(73) Titulaire: LISI Aerospace, 75012 Paris (FR)
(72) Inventeur: RENARD, Laurent, 95310 Saint-Ouen-L'Aumône (FR)
(74) Mandataire: Lavoix

(56) Documents cités:
- EP-B1- 3 215 696
- FR-A1- 2 261 396
- SU-A1- 925 015
- US-A- 4 549 708

## Description

La présente invention concerne un verrou destiné à assembler un panneau à une structure, du type comportant : une console apte à être fixée au panneau, ladite console comprenant un logement traversant, s'étendant selon un premier axe entre une première et une seconde extrémités ; un corps coulissant, mobile en translation selon le premier axe dans le logement de la console et s'étendant entre une première et une seconde extrémités ; et un bras d'accrochage s'étendant selon un deuxième axe entre une première et une seconde extrémités, ladite première extrémité comprenant un crochet, ladite seconde extrémité étant reliée à la première extrémité du corps coulissant ; le bras d'accrochage étant en saillie par rapport à la première extrémité (54) du logement ; le crochet du bras d'accrochage étant apte à coopérer avec une barre d'accrochage fixée à la structure ; le bras d'accrochage étant mobile par rapport au corps coulissant entre une première et une deuxième conformations, telles que dans la première conformation, le deuxième axe est incliné d'un premier angle non nul par rapport au premier axe ; et dans la deuxième conformation, le deuxième axe est parallèle au premier axe.

Un verrou destiné à assembler un panneau à une structure est connu de FR2261396 A1.

L'invention s'applique particulièrement aux verrous de capots de nacelles d'aéronefs. Un tel verrou est notamment connu du document US4549708.

Les verrous sont généralement positionnés sous la nacelle. Une telle position rend difficile l'accès à ces verrous.

La présente invention a pour but de proposer un verrou adapté aux capots de nacelles et présentant un accès facilité par rapport aux solutions connues.

A cet effet, l'invention a pour objet un verrou du type précité, dans lequel le corps coulissant est mobile dans le logement selon le premier axe entre une position de déverrouillage et une position de verrouillage ; le verrou étant configuré de sorte que : dans la position de déverrouillage du corps coulissant, le bras d'accrochage est dans la première conformation, ledit bras d'accrochage étant dans une première position axiale par rapport à la console ; dans la position de verrouillage du corps coulissant, le bras d'accrochage est dans la deuxième conformation, ledit bras d'accrochage étant dans une deuxième position axiale par rapport à la console, plus proche de la seconde extrémité du logement que dans la première position ; et dans une position intermédiaire, entre les positions de verrouillage et de déverrouillage, le bras d'accrochage est dans la deuxième conformation et dans la première position axiale par rapport à la console.

Suivant d'autres aspects avantageux de l'invention, le verrou comporte l'une ou plusieurs des caractéristiques suivantes, prises isolément ou suivant toutes les combinaisons techniquement possibles :
- le verrou est configuré de sorte que, dans la deuxième conformation du bras d'accrochage, la seconde extrémité dudit bras d'accrochage est plus éloignée de la seconde extrémité du corps coulissant que dans la première conformation dudit bras d'accrochage ;
- le verrou comporte en outre : un étrier, bloqué en translation par rapport au bras d'accrochage et mobile en translation selon le premier axe par rapport au corps coulissant ; et un ressort de compression, disposé selon le premier axe entre l'étrier et le corps coulissant ; la première et la deuxième conformations du bras d'accrochage correspondant respectivement à une configuration comprimée et à une configuration déployée du ressort de compression ;
- l'étrier comporte une butée orientée vers la première extrémité du bras d'accrochage ; et le logement de la console comporte une contre-butée, apte à coopérer avec la butée selon le premier axe ; le verrou étant configuré en ce que : dans la position de déverrouillage et dans la position intermédiaire du corps coulissant, la butée est au contact de la contre-butée ; et dans la position de verrouillage, la butée est disposée à distance de la contre-butée ;
- la seconde extrémité du bras d'accrochage comprend un premier et un deuxième trous traversants, perpendiculaires au deuxième axe ; la première extrémité du corps coulissant comprend : une première fente parallèle au premier axe ; et une deuxième fente inclinée d'un angle non nul par rapport au premier axe ; chacune des première et deuxième fentes comprenant une première et une seconde extrémités fermées ;
- le verrou comporte en outre une première et une deuxième goupilles insérées respectivement dans le premier et dans le deuxième trous traversants du bras d'accrochage ; la première goupille étant apte à coulisser dans la première fente, la deuxième goupille étant apte à coulisser dans la deuxième fente ; le verrou étant configuré de sorte que : dans la première conformation du bras d'accrochage, chacune des première et deuxième goupilles est disposée à la première extrémité, respectivement de la première et de la deuxième fente ; et dans la deuxième conformation du bras d'accrochage, chacune des première et deuxième goupilles est disposée à la seconde extrémité, respectivement de la première et de la deuxième fente ;
- le corps coulissant comprend une ouverture traversante, et la console comprend une tige engagée dans l'ouverture traversante, la tige étant apte à coulisser dans l'ouverture traversante selon le premier axe, lors du déplacement du verrou entre la position de verrouillage et la position de déverrouillage.

L'invention se rapporte en outre à un aéronef comprenant : une structure, un panneau mobile par rapport à ladite structure ; et un verrou tel que décrit ci-dessus, ledit verrou étant fixé au panneau de sorte qu'en position de verrouillage du corps coulissant par rapport à la console, ledit verrou bloque une ouverture du panneau par rapport à la structure.

L'invention sera mieux comprise à la lecture de la description qui va suivre, donnée uniquement à titre d'exemple non limitatif et faite en se référant aux dessins sur lesquels :
[Fig 1] la figure 1 est une vue partiellement éclatée, en perspective, d'un verrou selon un mode de réalisation de l'invention, dans une première configuration ;
[Fig 2] [Fig 3] les figures 2 et 3 sont des vues en coupe du verrou de la figure 1, respectivement dans la première et dans une deuxième configurations ; et
[Fig 4] la figure 4 est une vue en coupe d'un aéronef comprenant le verrou des figures 1 à 3, ledit verrou étant dans une troisième configuration.

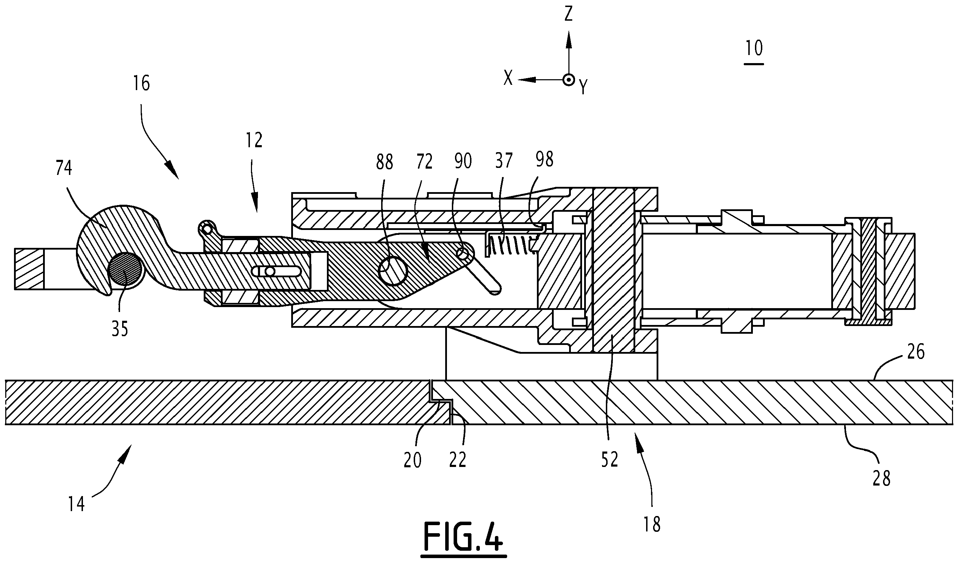

La figure 4 représente un aéronef 10 comprenant un verrou 12 selon un mode de réalisation de l'invention. Plus précisément, l'aéronef 10 comporte en outre : une structure 14, dans laquelle est aménagé un compartiment 16 ; et un panneau 18, articulé sur la structure 14 et apte à ouvrir et à fermer le compartiment 16. Dans une configuration fermée dudit compartiment 16, visible sur la figure 4, un bord 20 du panneau 18 est au contact d'un bord 22 de la structure 14.

Comme précisé ci-après, le verrou 12 est assemblé au panneau 18. Dans la suite de la description, on considère une base orthonormée (X, Y, Z) associée au panneau 18 et au verrou 12, la direction Z représentant la verticale.

On considère ici que le panneau 18 comporte une face supérieure 26 et une face inférieure 28, chacune desdites faces s'étendant sensiblement dans un plan (X, Y). Dans une configuration fermée du panneau 18, visible sur la figure 4, la face supérieure 26 est orientée vers le compartiment 16.

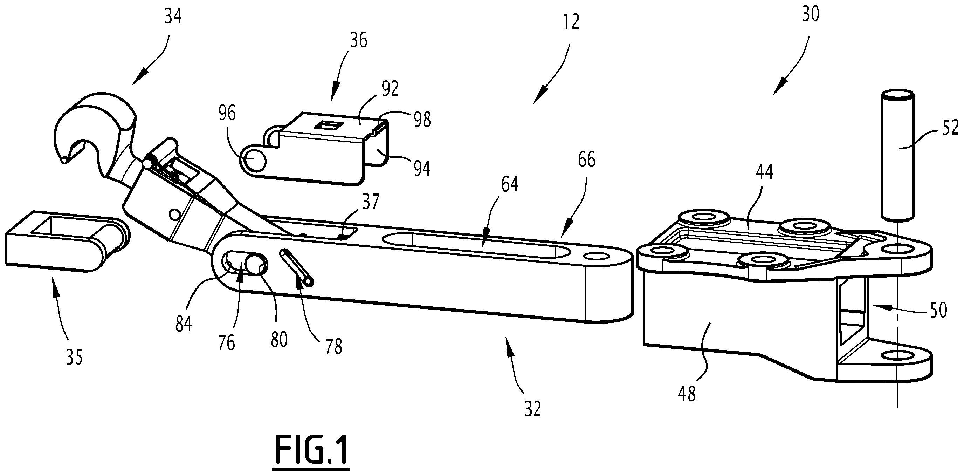

Le verrou 12, également visible sur les figures 1, 2 et 3, comporte : une console 30 ; un corps coulissant 32 et un bras d'accrochage 34 adapté pour s'engager avec une barre d'accrochage 35. Dans le mode de réalisation représenté, le verrou 12 comporte en outre : un étrier 36 ; un ressort 37 de compression ; et une première 38 et une deuxième 39 goupilles.

De préférence, le verrou 12 comprend en outre un organe d'actionnement (non représenté).

La console 30 s'étend selon un premier axe 42 parallèle à X et comporte une plaque supérieure 44 et une plaque inférieure 46. Lesdites plaques sont sensiblement planes et parallèles entre elles.

La plaque inférieure 46 est fixée à la face supérieure 26 du panneau 18.

Sur une première portion selon X de la console 30, des parois latérales 48 relient les plaques supérieure 44 et inférieure 46, formant un logement 50 traversant. Le logement 50 s'étend selon le premier axe 42. Sur une deuxième portion selon X de la console 30, les plaques supérieure 44 et inférieure 46 sont reliées par une tige 52 parallèle à Z.

Une première extrémité 54 du logement 50 forme une extrémité de la console 30 selon X. Une seconde extrémité 56 dudit logement ouvre sur la tige 52.

Le corps coulissant 32 est mobile en translation selon le premier axe 42 dans le logement 50 de la console 30.

Une première portion selon X du corps coulissant 32 comporte deux pattes 58 parallèles. Chaque patte 58 est sensiblement plane et s'étend dans un plan (X, Z). Les pattes 58 sont espacées l'une de l'autre selon Y et symétriques l'une de l'autre par rapport à un plan (X, Z) passant par le premier axe 42. Une extrémité libre 60 des pattes 58 selon X forme une première extrémité du corps coulissant 32. Les pattes 58 seront décrites plus précisément ci-après.

Entre les pattes 58, la première portion du corps coulissant 32 comporte en outre un ergot 62 disposé selon le premier axe 42.

Une seconde portion selon X du corps coulissant 32 comporte une ouverture 64. Ladite ouverture 64 est traversante selon Z et s'étend selon X entre deux extrémités fermées. La tige 52 de la console 30 est engagée dans l'ouverture 64. Une extrémité selon X de l'ouverture 64, opposée aux pattes 58, est disposée à une seconde extrémité 66 du corps coulissant 32.

Le bras d'accrochage 34 s'étend selon un deuxième axe 68, entre une première 70 et une seconde 72 extrémités. Le deuxième axe 68 est coplanaire avec le premier axe 42 selon un plan (X, Z).

La première extrémité 70 du bras d'accrochage 34 comprend un crochet 74.

La seconde extrémité 72 du bras d'accrochage 34 est disposée entre les pattes 58 du corps coulissant 32. Le bras d'accrochage 34, en particulier le crochet 74, est en saillie selon X par rapport à la première extrémité 54 du logement 50 de la console.

Le bras d'accrochage 34 est relié au corps coulissant 32 comme décrit ci-après :
Chaque patte 58 du corps coulissant 32 comporte une première 76 et une deuxième 78 fentes rectilignes. La première fente 76 est parallèle au premier axe 42. La deuxième fente 78 est inclinée d'un premier angle α non nul par rapport au premier axe. Le premier angle α est préférentiellement compris entre 20° et 60°.

Les première 76 et deuxième 78 fentes sont écartées l'une de l'autre selon X, la première fente 76 étant la plus proche de la première extrémité 60 du corps coulissant. Chaque fente s'étend entre une première 80, 82 et une seconde 84, 86 extrémités fermées.

La seconde extrémité 72 du bras d'accrochage 34 comprend un premier 88 et un deuxième 90 trous traversants, perpendiculaires au deuxième axe 68.

Chacune des première 38 et deuxième 39 goupilles est insérée dans l'un des premier 88 et deuxième 90 trous traversants. Chaque extrémité de la première goupille 38 est apte à coulisser dans la première fente 76 de l'une des pattes 58 du corps coulissant 32, entre la première 80 et la seconde 84 extrémités de ladite première fente. Chaque extrémité de la deuxième goupille 39 est apte à coulisser dans la deuxième fente 78 de l'une des pattes 58 du corps coulissant 32, entre la première 82 et la seconde 86 extrémités de ladite deuxième fente.

La barre d'accrochage 35 est fixée à la structure 14 et disposée dans le compartiment 16. La barre d'accrochage 35 est apte à coopérer avec le crochet 74 du bras d'accrochage 34. Plus précisément, dans la configuration fermée du panneau 18, visible sur la figure 4, le crochet 74 agrippe la barre d'accrochage 35 de sorte à maintenir le panneau dans la configuration fermée. La barre d'accrochage 35 s'étend alors selon Y, perpendiculairement au premier axe 42.

L'étrier 36 comporte une plaque supérieure 92 et deux plaques latérales 94 reliées par ladite plaque supérieure. Chaque plaque latérale 94 s'étend sensiblement dans un plan (X, Z), les plaques latérales étant disposées de part et d'autre de la première portion du corps coulissant 32, formée par les pattes 58.

Chacune des plaques latérales 94 comporte un orifice 96. Chaque extrémité de la première goupille 38 est insérée dans l'orifice 96 de l'une desdites plaques latérales. Ainsi, l'étrier 36 est bloqué en translation par rapport au bras d'accrochage 34 et mobile en translation selon le premier axe 42 par rapport au corps coulissant 32.

La plaque supérieure 92 de l'étrier 36 comporte une butée 98 en saillie selon Z par rapport à ladite plaque. La butée 98 est orientée selon le premier axe 42, vers la première extrémité 70 du bras d'accrochage. La butée 98 est apte à coopérer avec une contre-butée 100 disposée dans le logement 50 de la console 30, proche de la première extrémité 54 dudit logement.

L'étrier 36 comporte en outre une languette 102 en saillie selon Z par rapport à la plaque supérieure 92, dans un sens opposé à la butée 98.

Le ressort 37 de compression est un ressort hélicoïdal, disposé selon le premier axe 42 entre l'ergot 62 du corps coulissant 32 et la languette 102 de l'étrier 36.

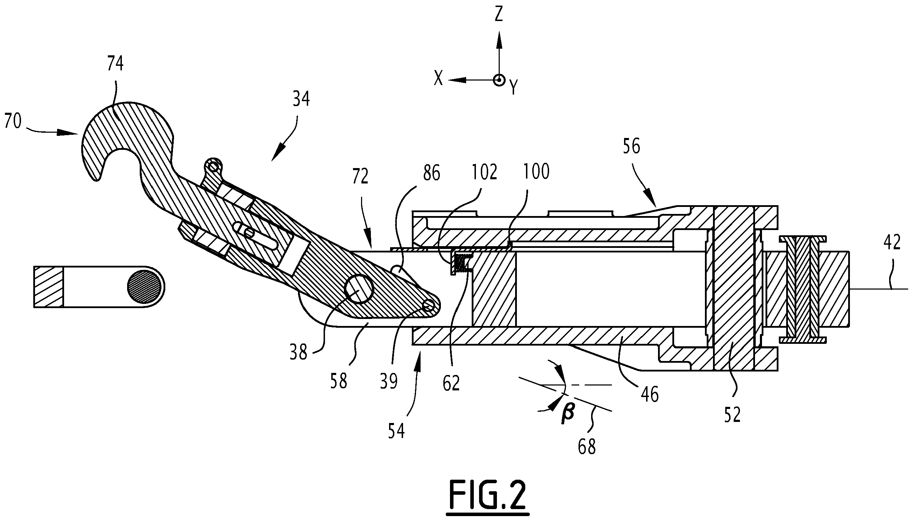

Une première configuration du verrou 12 est représentée sur les figures 1 et 2.

Dans ladite première configuration du verrou 12, le bras d'accrochage 34 est dans une première conformation par rapport au corps coulissant 32.

Dans la première conformation du bras d'accrochage 34, le deuxième axe 68 est incliné d'un deuxième angle β non nul par rapport au premier axe 42. Le deuxième angle β est choisi pour permettre un désengagement du crochet 74 d'avec la barre d'accrochage 35. Par exemple, le deuxième angle β est inférieur ou égal à 30°.

Dans la première conformation du bras d'accrochage 34, la première goupille 38 est disposée à la première extrémité 80 de la première fente 76 de chaque patte 58 du corps coulissant 32 ; et la deuxième goupille 39 est disposée à la première extrémité 82 de la deuxième fente 78 de chaque patte 58.

En outre, dans la première conformation du bras d'accrochage 34, la languette 102 de l'étrier 36 est proche selon X de l'ergot 62 du corps coulissant 32, le ressort 37 de compression étant ainsi dans une configuration comprimée.

Par ailleurs, dans la première configuration du verrou 12, le corps coulissant 32 est disposé dans une première position selon le premier axe 42 par rapport à la console 30. Dans ladite première position, dite position de déverrouillage, la butée 98 de l'étrier 36 est au contact de la contre-butée 100 du logement 50 ; et la tige 52 de la console 30 est proche de la seconde extrémité 66 du corps coulissant 32.

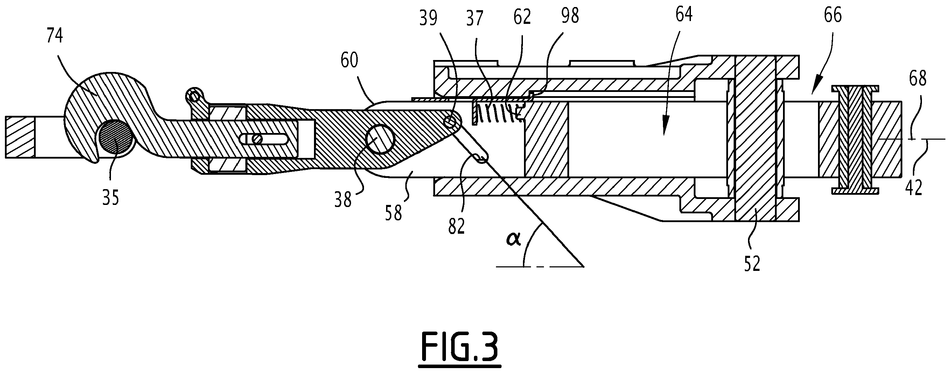

Une deuxième configuration du verrou 12 est représentée sur la figure 3.

Dans ladite deuxième configuration du verrou 12, le bras d'accrochage 34 est dans une deuxième conformation par rapport au corps coulissant 32.

Dans la deuxième conformation du bras d'accrochage 34, le deuxième axe 68 est parallèle au premier axe 42. Dans le mode de réalisation représenté, les premier et deuxième axes sont confondus dans la deuxième conformation du bras d'accrochage 34.

Dans la deuxième conformation du bras d'accrochage 34, la première goupille 38 est disposée à la deuxième extrémité 84 de la première fente 76 de chaque patte 58 du corps coulissant 32 ; et la deuxième goupille 39 est disposée à la deuxième extrémité 86 de la deuxième fente 78 de chaque patte 58.

En outre, dans la deuxième conformation du bras d'accrochage 34, la languette 102 de l'étrier 36 est éloignée selon X de l'ergot 62 du corps coulissant 32, par rapport à la première conformation du bras d'accrochage. Le ressort 37 de compression est ainsi dans une configuration déployée.

De plus, dans la deuxième configuration du verrou 12, la première extrémité 70 du bras d'accrochage est disposée proche de la barre d'accrochage 35 ; et le crochet 74 est écarté d'une distance non nulle de ladite barre d'accrochage.

Par ailleurs, dans la deuxième configuration du verrou 12, le corps coulissant 32 est disposé dans une deuxième position selon le premier axe 42 par rapport à la console 30. Dans ladite deuxième position, dite position intermédiaire, la butée 98 de l'étrier 36 est au contact de la contre-butée 100 du logement 50 ; et la tige 52 de la console 30 est plus proche de la première extrémité 60 du corps coulissant 32 que dans la position de déverrouillage dudit corps coulissant.

Une troisième configuration du verrou 12 est représentée sur la figure 4.

Dans ladite troisième configuration du verrou 12, le bras d'accrochage 34 est dans la deuxième conformation, précédemment décrite, par rapport au corps coulissant 32 ; et le crochet 74 est engagé sur la barre d'accrochage 35.

Par ailleurs, dans la troisième configuration du verrou 12, le corps coulissant 32 est disposé dans une troisième position selon le premier axe 42 par rapport à la console 30. Dans ladite troisième position, dite position de verrouillage, la butée 98 de l'étrier 36 est écartée selon X de la contre-butée 100 du logement 50 ; et la tige 52 de la console 30 est plus proche de la première extrémité 60 du corps coulissant 32 que dans la position intermédiaire dudit corps coulissant.

L'organe d'actionnement (non représenté) du verrou 12 est configuré pour déplacer le corps coulissant 32 par rapport à la console 30, entre la position de déverrouillage et la position de verrouillage décrites ci-dessus.

Selon un mode de réalisation, l'organe d'actionnement comprend une biellette reliant la seconde extrémité 66 du corps coulissant 32 au panneau 18. Ladite biellette peut être actionnée manuellement.

Selon des variantes de réalisation, l'organe d'actionnement comprend un vérin hydraulique ou un moteur électrique.

Un procédé de fonctionnement du verrou 12 décrit ci-dessus va maintenant être décrit.

On considère que le verrou est dans la première configuration des figures 1 et 2. L'organe d'actionnement dudit verrou est alors activé de sorte à déplacer en translation le corps coulissant 32 par rapport à la console 30, selon le premier axe 42, de la position de déverrouillage vers la position intermédiaire.

Durant ledit déplacement, le ressort 37 de compression se détend, maintenant la butée 98 de l'étrier au contact de la contre-butée 100 du logement 50. Le bras d'accrochage 34 reste donc fixe en translation par rapport à la console 30.

Par ailleurs, en raison du déplacement du corps coulissant 32, chacune des goupilles 38, 39 se déplace de la première 80, 82 vers la seconde 84, 86 extrémité de la fente 76, 78 correspondante.

En raison de l'inclinaison de la deuxième fente 78, il en résulte que le bras d'accrochage 34 subit une rotation dans le sens anti-horaire par rapport à la console 30, autour d'un axe de rotation matérialisé par la première goupille 38. Le bras d'accrochage passe donc de la première à la deuxième conformations, décrites ci-dessus. Les premier 42 et deuxième 68 axes sont ainsi confondus.

L'organe d'actionnement poursuit ensuite le déplacement du corps coulissant 32, de la position intermédiaire à la position de verrouillage décrite ci-dessus. L'étrier 36 étant bloqué par rapport au bras d'accrochage 34 par la première goupille 38, la butée 98 s'écarte de la contre-butée 100 et le bras d'accrochage 34 se déplace selon le premier axe 42 par rapport à la console 30. Le crochet 74 se rapproche ainsi de la barre 35 d'accrochage, jusqu'à entrer en contact selon X avec ladite barre. Le verrou 12 est ainsi dans la troisième configuration de la figure 4, qui maintient fermé le panneau 18.

## Revendications

1. Verrou (12) destiné à assembler un panneau (18) à une structure (14), ledit verrou comprenant :
- une console (30) apte à être fixée au panneau, ladite console comprenant un logement (50) traversant, s'étendant selon un premier axe (42) entre une première (54) et une seconde (56) extrémités ;
- un corps coulissant (32), mobile en translation selon le premier axe dans le logement de la console entre une position de déverrouillage et une position de verrouillage, le corps coulissant s'étendant entre une première (60) et une seconde (66) extrémités ; et
- un bras d'accrochage (34) s'étendant selon un deuxième axe (68) entre une première (70) et une seconde (72) extrémités, ladite première extrémité comprenant un crochet (74), ladite seconde extrémité étant reliée à la première extrémité du corps coulissant ; le bras d'accrochage étant en saillie par rapport à la première extrémité (54) du logement ;
le crochet (74) du bras d'accrochage étant apte à coopérer avec une barre d'accrochage (35) fixée à la structure ;
le bras d'accrochage étant mobile par rapport au corps coulissant entre une première et une deuxième conformations, telles que dans la première conformation, le deuxième axe (68) est incliné d'un premier angle (β) non nul par rapport au premier axe (42) ; et dans la deuxième conformation, le deuxième axe est parallèle au premier axe ;
le verrou étant configuré de sorte que :
- dans la position de déverrouillage du corps coulissant, le bras d'accrochage (34) est dans la première conformation et dans une première position axiale par rapport à la console ;
- dans la position de verrouillage du corps coulissant, le bras d'accrochage est dans la deuxième conformation et dans une deuxième position axiale par rapport à la console, plus proche de la seconde extrémité (56) du logement que dans la première position ;
- dans une position intermédiaire, entre les positions de verrouillage et de déverrouillage, le bras d'accrochage est dans la deuxième conformation et dans la première position axiale par rapport à la console ;
le verrou étant **caractérisé en ce que**, dans la deuxième conformation du bras d'accrochage, la seconde extrémité (72) dudit bras d'accrochage est plus éloignée de la seconde extrémité (66) du corps coulissant que dans la première conformation dudit bras d'accrochage.

2. Verrou selon la revendication 1, comportant en outre :
- un étrier (36), bloqué en translation par rapport au bras d'accrochage (34) et mobile en translation selon le premier axe (42) par rapport au corps coulissant (32) ; et
- un ressort (37) de compression, disposé selon le premier axe entre l'étrier et le corps coulissant ;
la première et la deuxième conformations du bras d'accrochage correspondant respectivement à une configuration comprimée et à une configuration déployée du ressort de compression.

3. Verrou selon la revendication 2, dans lequel : l'étrier comporte une butée (98) orientée vers la première extrémité du bras d'accrochage ; et le logement de la console comporte une contre-butée (100), apte à coopérer avec la butée selon le premier axe ;
le verrou étant configuré en ce que : dans la position de déverrouillage et dans la position intermédiaire du corps coulissant, la butée est au contact de la contre-butée ; et dans la position de verrouillage, la butée est disposée à distance de la contre-butée.

4. Verrou selon l'une des revendications précédentes, dans lequel :
- la seconde extrémité (72) du bras d'accrochage comprend un premier (88) et un deuxième (90) trous traversants, perpendiculaires au deuxième axe ;
- la première extrémité du corps coulissant comprend : une première fente (76) parallèle au premier axe ; et une deuxième fente (78) inclinée d'un angle (α) non nul par rapport au premier axe ; chacune des première et deuxième fentes comprenant une première (80, 82) et une seconde (84, 86) extrémités fermées ;
- le verrou comporte en outre une première (38) et une deuxième (39) goupilles insérées respectivement dans le premier et dans le deuxième trous traversants du bras d'accrochage ; la première goupille étant apte à coulisser dans la première fente, la deuxième goupille étant apte à coulisser dans la deuxième fente ;
le verrou étant configuré de sorte que :
- dans la première conformation du bras d'accrochage, chacune des première et deuxième goupilles est disposée à la première extrémité (80, 84), respectivement de la première et de la deuxième fente ; et
- dans la deuxième conformation du bras d'accrochage, chacune des première et deuxième goupilles est disposée à la seconde extrémité (82, 86), respectivement de la première et de la deuxième fente.

5. Verrou selon l'une des revendications précédentes, dans lequel :
- le corps coulissant (32) comprend une ouverture (64) traversante, et
- la console (30) comprend une tige (52) engagée dans l'ouverture traversante, la tige étant apte à coulisser dans l'ouverture traversante selon le premier axe (42), lors du déplacement du verrou entre la position de verrouillage et la position de déverrouillage.

6. Aéronef (10) comprenant : une structure (14), un panneau (18) mobile par rapport à ladite structure ; et un verrou (12) selon l'une des revendications précédentes, ledit verrou étant fixé au panneau de sorte qu'en position de verrouillage du corps coulissant (32) par rapport à la console (30), ledit verrou bloque une ouverture du panneau par rapport à la structure.

## Patentansprüche

1. Verriegelung (12) zum lösbaren Verbinden einer Platte (18) mit einer Struktur (14), die Verriegelung umfassend:
- eine Konsole (30), die geeignet ist, um an der Platte befestigt zu werden, die Konsole umfassend eine durchgehende Aufnahme (50), die sich entlang einer ersten Achse (42) zwischen einem ersten (54) und einem zweiten (56) Ende erstreckt;
- einen Gleitkörper (32), der entlang der ersten Achse im Konsolengehäuse zwischen einer Entriegelungsposition und einer Verriegelungsposition translatorisch beweglich ist, wobei sich der Gleitkörper zwischen einem ersten (60) und einem zweiten (66) Ende erstreckt; und
- einen Einhängearm (34), der sich entlang einer zweiten Achse (68) zwischen einem ersten (70) und einem zweiten (72) Ende erstreckt, wobei das erste Ende einen Haken (74) umfasst, wobei das zweite Ende mit dem ersten Ende des Gleitkörpers verbunden ist; wobei der Einhängearm in Bezug auf das erste Ende (54) des Gehäuses hervorsteht;
der Haken (74) des Einhängearms geeignet ist, um mit einer Einhängestange (35) zusammenzuwirken, die an der Struktur befestigt ist;
wobei der Einhängearm in Bezug auf den Gleitkörper zwischen einer ersten und einer zweiten Stellung beweglich ist, sodass die zweite Achse (68) in der ersten Stellung um einen ersten Winkel (β) ungleich Null in Bezug auf die erste Achse (42) geneigt ist; und die zweite Achse in der zweiten Stellung parallel zu der ersten Achse ist;
wobei die Verriegelung zu Folgendem konfiguriert ist:
- in der Entriegelungsposition des Gleitkörpers ist der Einhängearm (34) in der ersten Stellung und in einer ersten axialen Position in Bezug auf die Konsole;
- in der Verriegelungsposition des Gleitkörpers ist der Einhängearm in der zweiten Stellung und in einer zweiten axialen Position in Bezug auf die Konsole näher an dem zweiten Ende (56) des Gehäuses als in der ersten Position;
- der Einhängearm in einer Zwischenposition zwischen der Verriegelungs- und der Entriegelungsposition in der zweiten Stellung und in der ersten axialen Position in Bezug auf die Konsole ist;
wobei die Verriegelung **dadurch gekennzeichnet ist, dass** das zweite Ende (72) des Einhängearms in der zweiten Stellung des Einhängearms weiter von dem zweiten Ende (66) des Gleitkörpers entfernt ist als in der ersten Stellung des Einhängearms.

2. Verfahren nach Anspruch 1, ferner umfassend:
- einen Bügel (36), der in Bezug auf den Einhängearm (34) translatorisch blockiert und entlang der ersten Achse (42) in Bezug auf den Gleitkörper (32) translatorisch beweglich ist; und
- eine Druckfeder (37), die entlang der ersten Achse zwischen dem Bügel und dem Gleitkörper angeordnet ist;
wobei die erste und die zweite Stellung des Einhängearms einer komprimierten bzw. einer ausgefahrenen Konfiguration der Druckfeder entsprechen.

3. Verriegelung nach Anspruch 2, wobei: der Bügel einen Anschlag (98) aufweist, der zu dem ersten Ende des Einhängearms hin gerichtet ist; und die Aufnahme der Konsole einen Gegenanschlag (100) aufweist, der mit dem Anschlag entlang der ersten Achse zusammenwirken kann;
wobei der Riegel zu Folgendem konfiguriert ist: in der Entriegelungsposition und in der Zwischenposition des Gleitkörpers berührt der Anschlag den Gegenanschlag; und in der Verriegelungsposition ist der Anschlag von dem Gegenanschlag beabstandet angeordnet.

4. Verriegelung nach einem der vorherigen Ansprüche, wobei:
- das zweite Ende (72) des Einhängearms ein erstes (88) und ein zweites (90) Durchgangsloch umfasst, die senkrecht zu der zweiten Achse sind;
- das erste Ende des Gleitkörpers Folgendes umfasst: einen ersten Schlitz (76) parallel zu der ersten Achse; und einen zweiten Schlitz (78), der um einen Winkel (α) ungleich Null zu der ersten Achse geneigt ist; wobei jeder von dem ersten und dem zweiten Schlitz ein erstes (80, 82) und ein zweites (84, 86) geschlossenes Ende umfasst;
- die Verriegelung ferner einen ersten (38) und einen zweiten (39) Stift umfasst, die jeweils in den ersten und den zweiten Durchgangsschlitz des Einhängearms eingeführt werden; wobei der erste Stift geeignet ist, um in dem ersten Schlitz zu gleiten, wobei der zweite Stift geeignet ist, um in dem zweiten Schlitz zu gleiten;
wobei die Verriegelung zu Folgendem konfiguriert ist:
- in der ersten Stellung des Einhängearms ist jeder von dem ersten und dem zweiten Stift an dem ersten Ende (80, 84) des ersten bzw. zweiten Schlitzes angeordnet; und
- in der zweiten Stellung des Einhängearms ist jeder von dem ersten und dem zweiten Stift an dem zweiten Ende (82, 86) des ersten bzw. des zweiten Schlitzes angeordnet ist.

5. Verriegelung nach einem der vorherigen Ansprüche, wobei:
- der Gleitkörper (32) eine Durchgangsöffnung (64) umfasst, und
- die Konsole (30) eine Stange (52) umfasst, die in die Durchgangsöffnung eingreift, wobei die Stange geeignet ist, um in der Durchgangsöffnung entlang der ersten Achse (42) zu gleiten, wenn die Verriegelung zwischen der Verriegelungsposition und der Entriegelungsposition bewegt wird.

6. Luftfahrzeug (10), umfassend: eine Struktur (14), eine Platte (18), die in Bezug auf die Struktur beweglich ist; und eine Verriegelung (12) nach einem der vorherigen Ansprüche, wobei die Verriegelung an der Platte befestigt ist, sodass die Verriegelung in Verriegelungsposition des Gleitkörpers (32) in Bezug auf die Konsole (30) eine Öffnung der Platte in Bezug auf die Struktur blockiert.

## Claims

1. A latch (12) for mounting a panel (18) to a structure (14), said lock comprising:
- a bracket (30) suitable for being fixed to the panel, said bracket comprising a through housing (50) extending along a first axis (42) between first (54) and second (56) ends;
- a sliding body (32), translationally movable along the first axis in the console housing between an unlocked position and a locked position, the sliding body extending between a first (60) and a second (66) end; and
- a hooking arm (34) extending along a second axis (68) between a first (70) and a second (72) end, said first end comprising a hook (74), said second end being connected to the first end of the sliding body end being connected to the first end of the sliding body; the hooking arm projecting from the first end (54) of the housing;
the hook (74) of the attachment arm being able to cooperate with an attachment bar (35) fixed to the structure;
the hooking arm being movable relative to the sliding body between a first and a second conformation, such that in the first conformation, the second axis (68) is inclined at a non-zero first angle (β) relative to the first axis (42); and in the second configuration, the second axis is parallel to the first axis;
the lock being configured so that:
- when the sliding body is unlocked, the hooking arm (34) is in the first configuration and in a first axial position relative to the bracket;
- in the locking position of the sliding body, the hooking arm is in the second configuration and in a second axial position relative to the bracket, closer to the second end (56) of the housing than in the first position;
- in an intermediate position, between the locked and unlocked positions, the hooking arm is in the second configuration and in the first axial position relative to the bracket;
the latch being **characterised in that**, in the second configuration of the latch arm, the second end (72) of said latch arm is further away from the second end (66) of the sliding body than in the first configuration of said latch arm.

2. A latch according to claim 1, further comprising:
- a bracket (36), locked in translation with respect to the latching arm (34) and movable in translation along the first axis (42) with respect to the sliding body (32); and
- a compression spring (37) arranged along the first axis between the bracket and the sliding body;
the first and second configurations of the latch arm correspond respectively to a compressed configuration and an extended configuration of the compression spring.

3. A latch according to claim 2, in which: the bracket comprises a stop (98) oriented towards the first end of the attachment arm; and the housing of the bracket comprises a counter-stop (100), able to cooperate with the stop along the first axis;
the latch being configured in that: in the unlocked position and in the intermediate position of the sliding body, the stop is in contact with the counter-stop; and in the locked position, the stop is at a distance from the counter-stop.

4. A latch according to one of the preceding claims, wherein:
- the second end (72) of the attachment arm comprises a first (88) and a second (90) through hole, perpendicular to the second axis;
- the first end of the sliding body comprises: a first slot (76) parallel to the first axis; and a second slot (78) inclined at a non-zero angle (α) to the first axis; each of the first and second slots comprising first (80, 82) and second (84, 86) closed ends;
- the latch also comprises a first pin (38) and a second pin (39) inserted respectively in the first and second through holes of the attachment arm, the first pin being able to slide in the first slot, the second pin being able to slide in the second slot;
the lock being configured so that:
- in the first configuration of the latch arm, each of the first and second pins is arranged at the first end (80, 84) of the first and second slots respectively; and
- in the second configuration of the latch arm, each of the first and second pins is located at the second end (82, 86) of the first and second slots respectively.

5. A latch according to one of the preceding claims, wherein:
- the sliding body (32) comprises a through opening (64), and
- the bracket (30) comprises a rod (52) engaged in the through opening, the rod being able to slide in the through opening along the first axis (42) when the lock is moved between the locked position and the unlocked position.

6. An aircraft (10) comprising: a structure (14), a panel (18) movable with respect to said structure; and a latch (12) according to one of the preceding claims, said latch being attached to the panel so that in the locking position of the sliding body (32) with respect to the bracket (30), said latch blocks an opening of the panel with respect to the structure.
